# EUROPEAN PATENT SPECIFICATION

(11) **EP 0 818 904 B1**
(45) Date of publication and mention of the grant of the patent: **01.10.2003**
(21) Application number: 97111273.5
(22) Date of filing: 04.07.1997
(51) Int. Cl.: H04L 27/26

(54) **Timing recovery for DAB receivers**
Taktrückgewinnung für DAB-Empfänger
Récupération d'horloge pour récepteur "DAB"

(30) Priority: 12.07.1996 GB 9614712
(43) Date of publication of application: 14.01.1998
(73) Proprietor: ROKE MANOR RESEARCH LIMITED, Romsey, Hampshire, SO51 0ZN (GB); Ensigma Limited, Chepstow, Gwent NP6 5BP (GB)
(72) Inventor: Banham, Dominic Thomas Parfrey, Southampton SO14 6HZ (GB); Anderson, Adrian John, Chepstow, Gwent NP6 6QW (GB)
(74) Representative: Condon, Neil

(56) References cited:
- WO-A-95/19671
- WO-A-96/19056
- US-A- 4 599 732
- US-A- 5 282 228

## Description

The present invention relates to receivers for detecting data bearing radio signals and for recovering data carried by the radio signals.

Data is communicated by radio communications systems by arranging for radio signals to be modulated by signals representative of the data to be communicated. In order to provide the radio communications systems with a means making optimum use of an allocated radio frequency spectrum, the radio signal is modulated in accordance with a bandwidth efficient modulation scheme. Thereafter the modulated signals are up converted and transmitted on a radio frequency carrier, within the allocated spectrum.

To recover the data carried by the radio signal, a receiver operating within the radio communications system must be provided with a means for acquiring and tracking the carrier frequency of the modulated radio signal. Thereafter the receiver operates in accordance with the acquired carrier frequency and with the modulation scheme to de-modulate and down convert the radio signal to a baseband representation of the communicated data. In order to recover the data from the baseband signal, the receiver must further be provided with a means for detecting and recovering symbol timing of a sequence of symbols representative of the data communicated by the radio signal.

Known radio communications systems are provided with synchronisation signals which are transmitted as part of the data bearing radio signal, and which serve to provide a symbol timing reference from which the sequence of symbols representative of the data may be recovered. The receiver of the radio signals therefore operates to detect the synchronisation signals, from which the symbol timing reference is recovered. The symbol timing reference is thereafter used to sample the baseband signals, which samples are representative of the sequence of symbols appertaining to the communicated data.

Patent WO 95/19671 [ISAKSSON] discloses a method for synchronisation in OFDM modulation. Digital Audio Broadcasting (DAB) is a known communications system wherein a synchronisation signal is transmitted along with data communicated by radio communications signals and modulated in accordance with a modulation scheme provided by a DAB standard. The Digital Audio Broadcasting System serves to provide a means for transmitting high bandwidth digital communications signals for providing high fidelity music and entertainment programmes. To provide high bandwidth digital communications channels the DAB system is provided with an Orthogonal Frequency Division Multiplexing (OFDM) modulation scheme which operates to modulate the digital information on to a plurality of contemporaneously transmitted carrier frequency signals and wherein a synchronisation signal is provided along with the data communicated by the system. A receiver for detecting and demodulating radio signals transmitted in accordance with the DAB system, must therefore be provided with a means for recovering and tracking a carrier frequency of the DAB radio signal and for detecting and recovering the synchronisation signal thereby providing the receiver with the symbol timing of the symbol sequence representative of the digital information.

Receivers for detecting and recovering information broadcast by a DAB system are required to provide an accurate and stable reference for demodulating and down converting the radio frequency signal. This requirement is particularly stringent, since the plurality of carrier signals of the OFDM modulation scheme are separated by only 1kHz, and are modulated so as to be transmitted within a frequency band of 1.536 MHz, thereby requiring that a receiver for demodulating and down converting the DAB signals to an intermediate frequency signal, be provided with a highly accurate and stable reference and with a means for tracking phase offsets of the carrier. Furthermore a receiver for DAB signals must be provided with an accurate and stable timing reference for sampling a symbol sequence of the DAB radio signals in accordance with the synchronisation signals provided by the radio signals.

To provide an accurate reference signal for tracking and down converting radio signals, and for recovering symbol timing as aforementioned, known receivers embody voltage controlled crystal oscillators. Such voltage controlled crystal oscillators are expensive and are known to fail from to time to time. Furthermore, known receivers embody a voltage controlled oscillator for down converting the radio signal to an intermediate frequency signal and a further voltage controlled oscillator for generating the sample timing signal.

In order to detect and recover a radio signal, which has been modulated on to a highly accurately generated carrier frequency, in that the frequency in Hertz is represented to within a substantial number of significant figures, a receiver for recovering the radio signal must be provided with a reference frequency with a corresponding accuracy. For example the carrier frequency for the DAB system is 225.648 MHz. However known arrangements for generating such a highly accurate signal further demand a use of expensive components such as voltage controlled crystal oscillators.

It is an object of the present invention to provide advantages to receivers for detecting and recovering data carried by radio signals.

A receiver for detecting and recovering digital data represented as a sequence of symbols carried by radio signals, the said radio signals being provided with synchronisation information appertaining to a symbol timing of the sequence of symbols, the said receiver comprising a demodulator for down converting and demodulating the radio signal under control of a clock signal, and characterised in which demodulator operates to generate frequency error data in dependence upon the demodulated radio signal in combination with the clock signal, and to generate timing error data in dependence upon the synchronisation information from said symbol timing in combination with the clock signal, and a numerically controllable scaling loop which is provided with means to substantially continually adjust the scaling ratio used to generate the clock signal in dependence upon adaptive error data provided by a numerical error filter in dependence upon the frequency and timing error data in combination with a substantially fixed frequency reference signal, thereby providing the receiver with a means for recovering the said data.

The numerically controllable scaling loop may comprise a phase frequency detector means which operates to generate a phase error signal in accordance with a phase difference between the fixed frequency reference signal and a feedback signal communicated thereto, and a voltage controlled oscillator connected to the phase frequency detector which generates the clock signal in dependence upon the phase error signal, which clock signal is fed to a selectively controllable scaler, which said selectively controllable scaler operates to generate the said feedback signal representative of the clock signal divided by the adaptive error data.

The numerically controllable scaling loop operates to substantially continually adjust the scaling ratio of the clock signal thereby continually adjusting the feedback signal in accordance with a phase error between the feedback signal and the reference signal. The phase error is fed to the voltage controlled oscillator, which serves to generate the clock signal. The numerically controllable scaling loop is thereby provided with means for continually adjusting the frequency of the clock signal in accordance with the adaptive error data generated by the numerical error filter in dependence upon the frequency and timing error data.

The numerically controllable scaling loop may further comprise a low pass filter connected between the phase error detector and the voltage controlled oscillator, which operates to provide an average of the phase error signal fed to the voltage controlled oscillator. The voltage controller oscillator may be an LC voltage controlled oscillator. The selectively controllable scaler may be a selectively controllable divider.

By providing a low pass filter within the feedback loop for deriving the clock signal, jitter generated by a continuous adjustment of the switchable divider is removed, since jitter generated by such changes of the divider will be present at high frequencies rather than low frequencies.

The receiver may further comprise a divider unit which operates to generate a demodulating signal having a desired reference frequency by accordingly scaling the clock signal, and which demodulating signal is communicated to the demodulator, and serves to provide a reference for demodulating the received radio signal. The divider unit may further operate to generate a symbol timing signal by accordingly scaling the clock signal.

The numerical error generating filter may be an infinite impulse response filter and may be an error only filter such that the adaptive error data is fed to the selectively controllable divider which operates to maintain the clock signal at a predetermined value.

The receiver for recovering the digital information carried by a radio signal is provided with a reference signal at a fixed reference frequency fed to one side of a phase frequency detector. The phase frequency detector forms part of the numerically controllable dividing loop and operates to control the LC voltage controlled oscillator. The signal at the output of the LC voltage controlled oscillator is fed back to a selectively controllable divider which divides the signal at the output of the LC voltage controlled oscillator to produce the feedback signal fed to the other side of the phase frequency detector. The phase frequency detector therefore serves to maintain the frequency of the clock signal at the output of the LC voltage controlled oscillator which is arranged to be a desired frequency such that the divided down signal frequency of the clock fed to said other side of the phase frequency detector is substantially maintained to be equal in phase to the reference signal. By arranging for the adaptive error data to be constantly adapted by the numerical error generating filter means in accordance with the frequency and timing errors, a highly accurate clock signal of the desired frequency of several significant figures may be derived from a relatively inexpensive reference oscillator and LC voltage controlled oscillator. Although an instantaneous value of the desired clock frequency is of an integer value, by continuously adjusting the adaptive error data in accordance with the frequency and timing errors, a short term average of the clock signal will have a frequency which extends to the desired accuracy. Furthermore a frequency of the reference signal used to de-modulate and down convert the received radio signals will be tracked in accordance with a symbol timing rate provided by the synchronisation signals communicated by the radio signals.

One embodiment of the present invention will now be described by way of example only, with reference to the accompanying drawings wherein,
FIGURE 1 is a block diagram of a receiver for operation with a DAB system,
FIGURE 2 is a block diagram of a demodulator for Orthogonal Frequency Division Multiplexed Signals,
FIGURE 3 is a block diagram of a numerical error generating filter.

As aforementioned, a receiver for detecting and recovering Digital Audio Broadcast (DAB) radio signals must be provided with a reference frequency for detecting the Orthogonal Frequency Division Multiplexed (OFDM) radio signals. OFDM signals are comprised of a plurality of carrier frequency signals wherein digital data is modulated onto each carrier signal. The spacing of such carrier frequency signals is some what narrow. In the case of DAB this is in the order of one kilohertz whereas the carrier frequency is 225.648MHz within a bandwidth of 1.536MHz. As such the reference signal must have an accuracy to within one kilohertz in order that the plurality of carrier signals may be recovered. Furthermore, in order to recover the digital data represented as a sequence of digital symbols, the symbol timing sampling point must be established wherein samples of that sequence of symbols are taken at a substantially optimum or near optimum point. To this end the DAB system transmits such symbol timing information as hereinbefore mentioned.

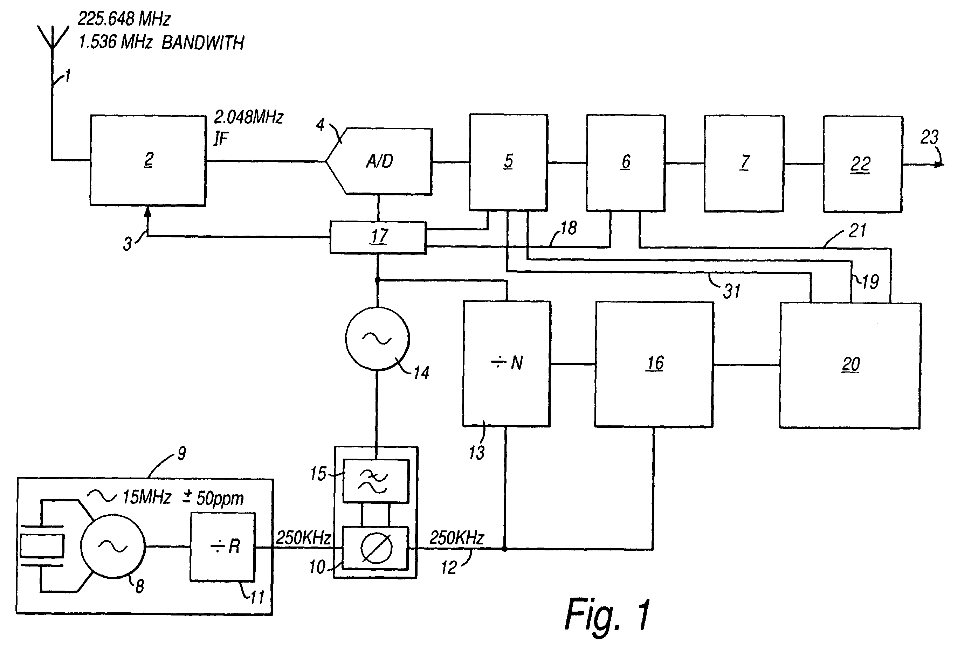

A receiver for providing a means for detecting and recovering DAB signals in accordance with an example embodiment of the present invention is provided in Figure 1. In Figure 1 an antenna 1, serves to detect a radio signal which is passed to an RF section 2. The RF section 2, serves to down convert the radio signal to an intermediate frequency signal centred at 2.048MHz in accordance with a reference signal provided by an input to the RF section 2, on a conductor 3. The intermediate frequency signal is thereafter converted into a digital domain by an analogue to digital converter 4, connected thereto which provides digital samples of the intermediate frequency signal, which are fed thereafter to a demodulator stage 5. Thereafter, the signal is fed to a DQPSK demodulator 6, which serves to demodulate each of the plurality of carrier frequency signals and thereafter the signals are communicated to a demultiplexer 7.

In order to recover the frequency and to recover symbol timing of the received DAB signal, a reference signal generator 9, is provided to generate a fixed frequency signal fed to one side of a phase frequency detector 10. The frequency of the fixed frequency signal is a nominal integer value of 250 kHz, and therefore can be provided by an inexpensive crystal oscillator 8, and a fixed divider 11. The phase frequency detector 10, is also fed by a feedback signal via a conductor 12, from a controllable divider 13. An output of the phase frequency detector feeds an LC voltage controlled oscillator 14, via a low pass filter 15, an output of which LC oscillator is connected to an input of a divider chain 17, and a first input to the controllable divider 13. The controllable divider 13, LC voltage controlled oscillator 14, in combination with the phase-frequency detector 10, form a numerically controllable scaling loop which operates to generate a clock signal at the output of the LC voltage controlled oscillator derived from the frequency of the reference signal fed to the first input of the voltage controlled oscillator 14. In the present embodiment, the reference signal has a frequency of 250KHz, from which an accurate clock signal with a frequency of 49.132MHz is generated. To achieve this the controllable divider 13, operates to divide the clock signal by an adaptive error number which in this case is 196.608. However only integer division is possible, and to achieve the desired accuracy, the selectively controllable divider operates to divide the clock signal frequency by a continually adapted amount between 192 and 200, but arranged such that the short term average of the effect of the controllable divider 13, is to divide the clock signal by the desired 196.608. As such the phase error signal fed to the voltage controlled oscillator 14, from the phase detector 10, will have an element of jitter as the selectively controllable divider serves to continuously change the divide ratio. However such jitter will be present in high frequency components of the phase error signal, and so by arranging for the phase error signal to pass through a low pass filter 15, before being applied to the voltage controlled oscillator 14, the jitter is substantially removed.

Connected to a second input of the controllable divider 13, is an error signal generated by a numerical error generating filter arrangement 16. The error filter arrangement 16 serves to generate the error adaptive number fed to the input of the controllable divider 13 which serves to change the divide ratio by which the clock signal at the output of the LC voltage controlled oscillator 14 is divided in order to generate the feedback signal fed to the phase frequency detector via the conductor 12. The numerical error filter 16, therefore serves to generate the error number fed to the controllable divider 13, and its operation will be described shortly. The divider chain 17, serves to divide the clock signal at the output of the LC voltage controlled oscillator 14, by an integer such that the demodulating reference signal fed via conductor 3 is produced. The divider chain 17 also produces a sample timing signal fed to the DQJSK demodulator 6, via conductor 18, which serves to define a sampling point for recovering the symbol sequences carried by the DAB radio signal. The demodulator stage 5, also operates to generate a frequency error signal provided on a conductor 19, which is fed to a tracking means 20. Also fed to the tracking means 20 is a timing error signal generated by the DQPSK demodulator 6 fed via conductor 21. The symbol sequence timing error signal is substantially derived from and in accordance with a synchronisation signal of the DAB system. The DQPSK demodulator 6, provides the timing error signal in accordance with the synchronisation signal detected and recovered thereby from the received DAB radio signals.

The tracking means 20, operates to generate tracking data fed to an input of the error generating filter 16, in accordance with an amount by which demodulated radio signal is offset from a desired optimum carrier frequency signal, and an amount by which symbol timing signal is mis-aligned from a desired symbol sampling point determined in accordance with the synchronisation signal. After the data has been demultiplexed by the demultiplexer 7, it is fed to a Viterbi decoder 22, which operates to correct errors within the recovered digital data and thereafter the data is passed to audio output means via conductor 23.

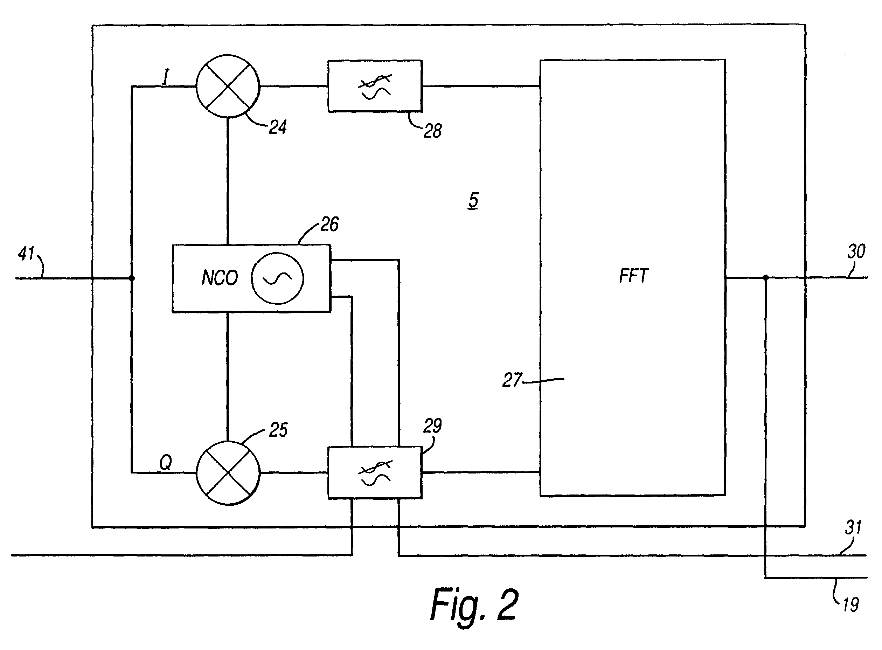

The demodulator stage 5 may be seen in more detail in Figure 2 where parts also appearing in Figure 1 also bear the same numerical designations. In Figure 2 the discrete time signal samples of the intermediate frequency signal are fed from the analogue to digital converter 4 to first and second multipliers 24, 25, which serve to digitally multiply the discrete time signals by discrete time demodulating signals generated by the numerically controlled oscillator 26, and fed to a second input of the first and second multipliers 24, 25. The first and second multipliers 24, 25, operate to scale the discrete time signal by the discrete time demodulating signals such that the first multiplier serves as an I or in phase demodulator and the second multiplier 25 serves as a Q or quadrature phase demodulator. Thereafter the I and Q results of the multiplication are fed to an FFT unit 27, via first and second low pass filters 28, 29, respectively. The FFT unit 27 serves to convert the discrete time I and Q components of the received complex baseband signal from the time domain into the frequency domain thereby providing a means for demodulating the OFDM signal into separate signal components from which the modulating data may be reconstructed. The frequency domain signals are fed via a conductor 30 to the DQPSK demodulator 6. The frequency domain signals are also fed from the output of the FFT unit 27 via a conductor 19 to the tracking unit 20 for processing and for generating the frequency error signal in accordance principles hereinbefore mentioned.

The frequency of the discrete time demodulating signals generated by the numerically controlled oscillator 26, are controlled in accordance with a frequency control signal derived from the clock signal via the divider unit 17 and serve in accordance with a second control signal provided by the tracking unit 20 via conductor 31 to adjust the frequency of the discrete time demodulating signals such that the plurality of carrier frequency signals remains within a predetermined bandwidth from which the FFT unit 27 can reconstruct the modulating data.

The tracking unit 20 thereby provides a means for maintaining the OFDM signal within a predetermined bandwidth in accordance with error frequency signals generated thereby. The tracking unit 20 also operates to compare timing signals provided to the DQPSK demodulator 6 with synchronisation information provided by the DAB radio signals as hereinbefore described and thereafter generates a timing error signal. The timing and frequency error signals are thereafter used to generate tracking data fed to the numerical error filter 16.

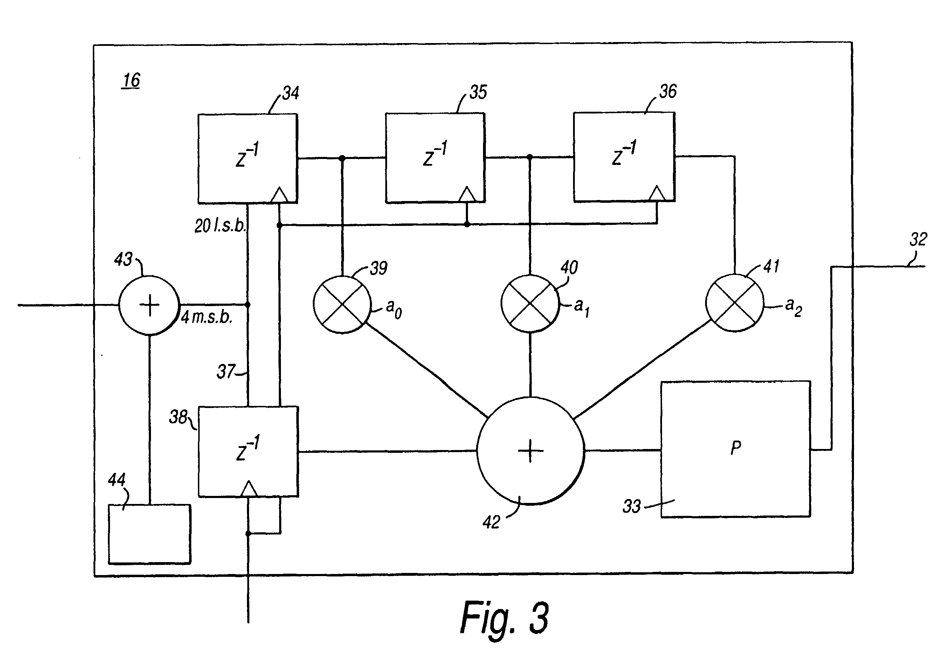

The numerical error filter 16 is shown in more detail in Figure 3 where parts also appearing in Figures 1 and 2 bear identical numerical designations. The tracking data P, is fed via a conductor 32, to a data store 33, within the error filter 16. The error filter 16 comprises a shift register with a plurality of stages. In this example embodiment there are three stages 34, 35 and 36 which operate to respectively delay filtered output samples fed from a conductor 37 from an output shift register 38. The 20 least significant bits of the filtered output sample generated by the output shift register 38 are fed to an input of the first stage 34, of the delay shift register. Thereafter, delayed and shifted versions filtered output samples are correspondingly fed to three scaling means 39, 40, 41, from an output of each stage of the shift register, which scaling means operate to scale the delayed and shifted filtered output samples by a set of predetermined coefficients designated a0, a1, a2. The scaling means 39, 40, 41, thereby serve to weight the delayed shifted filtered outputs samples by predetermined scaling coefficients a0, a1, a2. Thereafter, a summer 42 serves to add the delayed weighted output filter samples with the tracking data P, fed from the data store 33, to produce a combined signal fed to the input of the output delay shift register 38. The output shift register 38, and each stage 34, 35, 36, of the shift register shown in the numerical error filter 16, are clocked in accordance with clock signals generated from the feedback signal generated at the output of the selectively controllable divider 13. The filtered output samples generated by the output shift register 38, on conductor 37 feed a further summer 43, however, only the four most significant bits of the filtered output sample are fed to the further summer 43. The four most significant bits are representative of a combined timing and frequency error signal corresponding to time and frequency offsets between the DAB radio signal demodulated by the receiver and a desired optimum demodulating frequency and symbol timing. The further summer 43, operates to generate the error data in the range of 192 to 200 by adding the four most significant bits representative of the error offset provided by the output shift register 38, to a nominal value of 196 which is the closest integer value to the desired dividing ratio of the selectively controllable dividing loop. The integer value of 196 is fed via a data store 44, to the second input of the further summer 43. The error filter therefore serves to provide a number at its output representative of an amount by which the controllable switchable divider 13, should be adjusted in order to provide that the reference frequency for the RF section 2, and the sample timing point fed to the DQPSK demodulator are at a substantially desired point.

The tracking unit 20, furthermore serves to adjust a numerically controlled oscillator 26, within the frequency tracking means 5, which numerically controlled oscillator 26, serves to generate an offset frequency signal which is used to modulate the intermediate frequency signal samples fed from the analogue to digital converter. The tracking unit 20 in combination with the numerically controlled oscillator 26 thereby provide a means for adjusting and fine-tuning the frequency offset in the received signal such that the plurality of carrier frequencies is maintained within a predetermined range.

The arrangement presented in Figure 1 provides a means for combined frequency and symbol synchronisation tracking of the received signal using an inexpensive LC oscillator and an inexpensive fixed oscillator without a requirement for voltage controlled crystal oscillators thereby providing an inexpensive implementation of a receiver for DAB signals.

As will be appreciated by those skilled in the art various modifications may be made to the receiver arrangement herein before described, whilst still falling within the scope of the present invention. For example, the receiver will find application with digital modulation schemes other than OFDM.

## Claims

1. A receiver for detecting and recovering digital data represented as a sequence of symbols carried by radio signals, the said radio signals being provided with synchronisation information appertaining to a symbol timing of the sequence of symbols, the said receiver comprising a demodulator (5) for down converting and demodulating the radio signal under control of a clock signal, and in which the demodulator operates to generate frequency error data in dependence upon the demodulated radio signal in combination with the clock signal, **characterised in that** the demodulator operates to generate timing error data in dependence upon the synchronisation information from said symbol timing in combination with the clock signal, and **in that** a numerically controllable scaling loop is provided with means to substantially continually adjust the scaling ratio used to generate the clock signal in dependence upon adaptive error data provided by a numerical error filter in dependence upon the frequency and timing error data in combination with a substantially fixed frequency reference signal, thereby providing the receiver with a means for recovering the said data.

2. A receiver as claimed in Claim 1, wherein the numerically controllable scaling loop comprises a phase frequency detector (10) means which operates to generate a phase error signal in accordance with a phase difference between the fixed frequency signal and a feedback signal communicated thereto, and a voltage controlled oscillator (14) connected to the phase frequency detector which generates the clock signal in dependence upon the phase error signal, which clock signal is fed to a selectively controllable scaler, which said selectively controllable scaler operates to generate the said feedback signal representative of the clock signal scaled by the adaptive error data.

3. A receiver as claimed in Claim 2, wherein the numerically controllable scaling loop further comprises a low pass filter (28) connected between the phase frequency detected and the voltage controlled oscillator, which operates to generate a mean phase error signal fed to the voltage controlled oscillator.

4. A receiver as claimed in Claim 1, 2 or 3, wherein the receiver further comprises a divider unit (13) which operates to generate a demodulating signal having a desired reference frequency by accordingly scaling the clock signal, and which demodulating signal is communicated to the demodulator (6), and serves to provide a reference for demodulating the received radio signal.

5. A receiver as claimed in Claim 4, wherein the divider unit further operates to generate a sample timing signal representative of a desired sampling rate by accordingly scaling the clock signal, and which sample timing signal is communicated to the demodulator for sampling the symbol sequence.

6. A receiver as claimed in any preceding Claim, wherein the numerical error filter is arranged to generate the adaptive error data within a predetermined range of values.

7. A receiver as claimed in any preceding Claim, wherein the numerical error filter further comprises an error tracking unit (20) connected to the demodulator, which operates to generate tracking data in dependence upon the frequency error and the timing error which tracking data is fed to the digital error filter for biasing the adaptive error data.

8. A receiver as claimed in Claim 7, wherein the digital error is an infinite impulse response filter.

9. A receiver as claimed in Claim 7, wherein the digital error is a finite impulse response filter.

10. A receiver as claimed in Claim 8, wherein the infinite impulse response filter comprises a shift register arranged to provide a plurality of delayed samples of an output signal from the said filter, a plurality of scaling means arranged to scale the said plurality of output samples by predetermined tap weights, a summing means arranged to sum the weighted output samples and the tracking data communicated thereto, and a delay means arranged to provide the output signal in accordance with delayed summed signals from the summing means.

11. A receiver as claimed in Claim 10, wherein the numerical error filter further comprises a second summing means (43) arranged to generate the adaptive error data by biasing the output signal from the infinite impulse response filter with predetermined bias data.

12. A receiver as claimed in any preceding Claim, wherein the selectively controllable scaler is a selectively controllable divider (13).

13. A Digital Audio Broadcast system including a receiver as claimed in any preceding Claim.

## Patentansprüche

1. Empfänger zur Detektion und Wiedererlangung digitaler Daten, die durch eine Zeichenabfolge, die von Funksignalen übertragen werden, dargestellt sind, wobei die Funksignale mit Synchronisationsinformation, die zu einem Zeichen-Timing der Zeichenabfolge gehört, versehen sind, wobei der Empfänger einen Demodulator (5) zur Abwärts-Wandlung und Demodulation des Funksignals unter Steuerung eines Taktsignals umfaßt und bei dem der Demodulator so arbeitet, daß er Frequenzfehler-Daten in Abhängigkeit des demodulierten Funksignals in Kombination mit dem Taktsignal erzeugt, **dadurch gekennzeichnet, daß** der Demodulator im Betrieb Timingfehler-Daten in Abhängigkeit von der Synchronisationsinformation aus dem Zeichen-Timing in Kombination mit dem Taktsignal erzeugt und daß eine numerisch steuerbare Skalierungsschleife mit Mitteln zur im wesentlichen kontinuierlichen Anpassung des Skalierungsverhältnisses versehen ist, die dazu verwendet werden, das Taktsignal in Abhängigkeit von adaptiven Fehlerdaten, die von einem numerischen Fehlerfilter in Abhängigkeit von der Frequenz geliefert werden, und von Timingfehler-Daten in Kombination mit einem im wesentlichen festen Frequenzreferenzsignal zu erzeugen, wodurch der Empfänger mit Mitteln zur Wiedererlangung der Daten versehen ist.

2. Empfänger nach Anspruch 1, bei dem die numerisch steuerbare Skalierungsschleife Phasen-Frequenz-Detektormittel (10), die im Betrieb ein Phasenfehler-Signal entsprechend einer Phasendifferenz zwischen dem festen Frequenzsignal und einem dazu übertragenen Rückführungssignal erzeugen, und einen spannungsgesteuerten Oszillator (14) umfaßt, der mit dem Phasen-Frequenz-Detektor verbunden ist und der das Taktsignal in Abhängigkeit des Phasenfehler-Signals erzeugt, wobei das Taktsignal an einen selektiv steuerbaren Skalierer angelegt ist, wobei der selektiv steuerbare Skalierer im Betrieb das Rückführungssignal erzeugt, das das mit den adaptiven Fehlerdaten skalierte Taktsignal darstellt.

3. Empfänger nach Anspruch 2, bei dem die numerisch steuerbare Skalierungsschleife darüber hinaus ein Tiefpaßfilter (28) umfaßt, das zwischen den Phasen-Frequenz-Detektor und den spannungsgesteuerten Oszillator geschaltet ist und das im Betrieb ein gemitteltes Phasenfehlersignal erzeugt, das an den spannungsgesteuerten Oszillator angelegt ist.

4. Empfänger nach Anspruch 1, 2 oder 3, bei dem der Empfänger darüber hinaus eine Teilereinheit (13) umfaßt, die im Betreib ein Demodulationssignal erzeugt, das durch entsprechendes Skalieren des Taktsignals eine gewünschte Frequenz aufweist, wobei das Demodulationssignal an den Demodulator (6) übertragen wird und dazu dient, eine Referenz zum Demodulieren des empfangenen Funksignals zu liefern.

5. Empfänger nach Anspruch 4, bei dem die Teilereinheit darüber hinaus im Betrieb ein Abtast-Timingsignal erzeugt, das eine gewünschte Abtastrate durch entsprechendes Skalieren des Taktsignals darstellt und das an den Demodulator zum Abtasten der Zeichenabfolge übertragen wird.

6. Empfänger nach einem der vorherigen Ansprüche, bei dem das numerische Fehlerfilter so ausgeführt ist, daß es die adaptiven Fehlerdaten innerhalb eines vorherbestimmten Bereichs von Werten erzeugt.

7. Empfänger nach einem der vorherigen Ansprüche, bei dem das numerische Fehlerfilter darüber hinaus eine Fehler-Nachführungseinheit (20) umfaßt, die mit dem Demodulator verbunden ist und die im Betrieb Nachführungsdaten in Abhängigkeit des Frequenzfehlers und des Timingfehlers erzeugt, wobei die Nachfürungsdaten an das digitale Fehlerfilter zur Voreinstellung der adaptiven Fehlerwerte angelegt werden.

8. Empfänger nach Anspruch 7, bei dem das digitale Fehlerfilter ein unbegrenztes Impulsantwortfilter ist.

9. Empfänger nach Anspruch 7, bei dem das digitale Fehlerfilter ein finites Impulsantwortfilter ist.

10. Empfänger nach Anspruch 8, bei dem das unbegrenzte Impulsantwortfilter ein Schieberegister, das so ausgeführt ist, daß es mehrere verzögerte Abtastwerte eines Ausgangssignals des Filters liefert, mehrere Skalierungsmittel, die so ausgeführt sind, daß sie die mehreren Abtastwerte des Ausgangs durch vorherbestimmte Abgriffsgewichte skalieren, ein Summiermittel, das so ausgefuhrt ist, daß es die gewichteten Abtastwerte des Ausgangs und die dahin übertragenen Nachführungsdaten summiert, und ein Verzögerungsmittel umfaßt, das so ausgeführt ist, daß es das Ausgangssignal entsprechend verzögerten summierten Signalen von dem Summiermittel liefert.

11. Empfänger nach Anspruch 8, bei dem das numerische Fehlerfilter darüber hinaus ein zweites Summiermittel (43) umfaßt, das so ausgeführt ist, daß es die adaptiven Fehlerdaten durch Voreinstellen des Ausgangssignals des unbegrenzten Impulsantwortfilters mit vorherbestimmten Voreinstelldaten erzeugt.

12. Empfänger nach einem der vorherigen Ansprüche, bei dem der selektiv steuerbare Skalierer ein selektiv steuerbarer Teiler (13) ist.

13. Digitales Audioübertragungssystem, das einen Empfänger nach einem der vorherigen Ansprüche umfaßt.

## Revendications

1. Récepteur permettant de détecter et de récupérer des données numériques représentées comme une séquence de symboles portée par des signaux radio, lesdits signaux radio étant fournis avec des informations relatives à la synchronisation dépendant d'une synchronisation de symbole de la séquence de symboles, ledit récepteur comprenant un démodulateur (5) pour convertir, abaisser et démoduler le signal radio sous le contrôle d'un signal d'horloge, et dans lequel le démodulateur sert à générer des données d'erreur de fréquence en fonction du signal radio démodulé en combinaison avec le signal d'horloge, **caractérisé en ce que** le démodulateur sert à générer des données d'erreur de synchronisation en fonction des informations relatives à la synchronisation provenant de ladite synchronisation de symbole en combinaison avec le signal d'horloge, et **en ce que** une boucle d'échelle contrôlable numériquement est fournie avec des moyens permettant d'ajuster de manière quasi continuelle le taux de mise à l'échelle utilisé pour générer le signal d'horloge en fonction des données d'erreur adaptatives fournies par un filtre d'erreur numérique d'après les données d'erreur de synchronisation et de fréquence en combinaison avec un signal de référence possédant une fréquence quasiment fixe, ce qui permet de fournir au récepteur un moyen permettant de récupérer lesdites données.

2. Récepteur selon la revendication 1, dans lequel la boucle d'échelle contrôlable numériquement comprend un détecteur phase-fréquence (10) qui sert à générer un signal d'erreur de phase en fonction d'un déphasage entre le signal de fréquence fixé et un signal de retour communiqué à celui-ci, et un oscillateur commandé en tension (14) connecté au détecteur phase-fréquence qui génère le signal d'horloge en fonction du signal d'erreur de phase, lequel signal d'horloge est délivré à un circuit d'échelle contrôlé de manière sélective, ledit circuit d'échelle contrôlé de manière sélective sert à générer ledit signal de retour représentatif du signal d'horloge mis à l'échelle par les données d'erreur adaptatives.

3. Récepteur selon la revendication 2, dans lequel la boucle d'échelle contrôlable numériquement comprend en outre un filtre passe-bas (28) connecté entre la phase-fréquence détectée et l'oscillateur commandé en tension, qui sert à générer un signal d'erreur de phase moyenne délivré à l'oscillateur commandé en tension.

4. Récepteur selon la revendication 1, 2 ou 3, dans lequel le récepteur comprend en outre une unité de division (13) qui sert à générer un signal de démodulation possédant une fréquence de référence désirée en mettant à l'échelle en conséquence le signal d'horloge, lequel signal de démodulation est communiqué au démodulateur (6) et sert à fournir une référence pour la démodulation du signal radio reçu.

5. Récepteur selon la revendication 4, dans lequel l'unité de division sert en outre à générer un signal de synchronisation d'échantillon représentatif d'une fréquence d'échantillonnage en mettant à l'échelle en conséquence le signal d'horloge, lequel signal de synchronisation d'échantillon est communiqué au démodulateur afin d'échantillonner la séquence de symboles.

6. Récepteur selon l'une quelconque des revendications précédentes, dans lequel le filtre d'erreur numérique est configuré pour générer les données d'erreur adaptatives à l'intérieur d'une plage de valeurs prédéterminée.

7. Récepteur selon l'une quelconque des revendications précédentes, dans lequel le filtre d'erreur numérique comprend en outre une unité de suivi des erreurs (20) connectée au démodulateur, qui sert à générer des données de suivi en fonction de l'erreur de fréquence et de l'erreur de synchronisation avec lesquelles les données de suivi sont délivrées au filtre d'erreur numérique pour polariser les données d'erreur adaptatives.

8. Récepteur selon la revendication 7, dans lequel l'erreur numérique est un filtre à réponse impulsionnelle infinie.

9. Récepteur selon la revendication 7, dans lequel l'erreur numérique est un filtre à réponse impulsionnelle finie.

10. Récepteur selon la revendication 8, dans lequel le filtre à réponse impulsionnelle infinie comprend un registre à décalage conçu pour fournir une pluralité d'échantillons retardés d'un signal de sortie à partir dudit filtre, une pluralité de moyens de mise à l'échelle conçus pour mettre à l'échelle ladite pluralité d'échantillons de sortie à l'aide de coefficients pondérés prédéterminés, des moyens de sommation conçu pour totaliser les échantillons de sortie pondérés et les données de suivi communiquées à ceux-ci, et des moyens de retard conçu pour fournir le signal de sortie en fonction des signaux totalisés retardés provenant des moyens de sommation.

11. Récepteur selon la revendication 10, dans lequel le filtre d'erreur numérique comprend en outre de seconds moyens de sommation (43) conçu pour générer les données d'erreur adaptatives en polarisant le signal de sortie à partir du filtre à réponse impulsionnelle infinie à l'aide de données polarisées prédéterminées.

12. Récepteur selon l'une quelconque des revendications précédentes, dans lequel le circuit d'échelle contrôlé de manière sélective est un diviseur à commande sélective (13).

13. Système de radiodiffusion numérique comprenant un récepteur tel que décrit dans l'une quelconque des revendications précédentes.
